# EUROPEAN PATENT SPECIFICATION

(11) **EP 2 913 732 B1**
(45) Date of publication and mention of the grant of the patent: **19.12.2018**
(21) Application number: 14178164.1
(22) Date of filing: 23.07.2014
(51) Int. Cl.: G05D 1/02

(54) **Lawn mower robot and method of controlling the same**
Rasenmähroboter und Verfahren zur Steuerung des Robots
Système de tondeuse robotisée et son procédé de commande

(30) Priority: 29.01.2014 KR 20140011043
(43) Date of publication of application: 02.09.2015
(73) Proprietor: LG Electronics Inc., Seoul 150-721 (KR)
(72) Inventor: Choi, Kyuchun, 153-802 Seoul (KR); Woo, Hanwool, 153-802 Seoul (KR); Park, Jongil, 153-802 Seoul (KR)
(74) Representative: Vossius & Partner Patentanwälte Rechtsanwälte mbB

(56) References cited:
- WO-A1-96/38770
- US-A1- 2012 290 165

## Description

This application claims the benefit of Korean Patent Application No. 10-2014-0011043, filed on January 29, 2014.

The present invention relates to a lawn mower robot and a method of controlling the same, and more particularly, to a lawn mower robot a main body of which may be efficiently driven within a region, and a method of controlling the same.

A lawn mower is an apparatus for mowing a lawn planted in a home's yard, a playground, or the like. Such a lawn mower is classified into a home type and a tractor type used in a wide playground or farm.

The lawn mower for home is classified into a walk behind type for mowing the lawn while a person directly drags the lawn mower from behind and a directly hand carrying type.

However, there are burdens in that persons should directly operate all of two types of lawn mowers.

Particularly, since it is difficult to mow the lawn of the yard by directly operating the lawn mower by a user in today's busy daily life, it is usual to hire outside persons for mowing the lawn, to thereby generate hiring costs.

Accordingly, an automatic robot type lawn mower has been developed in order to prevent generation of additional costs and reduce a user's burden. Many studies have been carried out in order to control moving performance of the automatic robot type lawn mower.

WO 96/38770 A1 discloses a method for automatically operating a robot within an enclosed area.

US 2012/290165 A1 relates to a flexible robotic lawn mower that utilizes the ultrasonic sensor nodes installing on the border, inside the lawn yard, and outside the lawn yard, to define the lawn yard region, to detect the position of the robotic lawn mower base, and to program the mowing route and grass cutting depth.

Accordingly, the present invention is directed to a lawn mower robot and a method of controlling the same that substantially obviates one or more problems due to limitations and disadvantages of the related art.

An object of the present invention is to provide a lawn mower robot and a method of controlling the same.

This object is achieved with the features of the independent claims. The dependent claims relate to aspect of the invention.

Another object of the present invention is to provide a lawn mower robot a main body of which may be efficiently driven in an overall region to thereby minimize a non-driving region, and a method of controlling the same

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of controlling a lawn mower robot includes acquiring coordinate information of a boundary indication unit defining an operation region, deriving an imaginary quadrangle having the operation region, determining coordinate points of the boundary indication unit which are respectively close to four vertexes of the quadrangle as four specific points, and allowing a main body to be driven inside the operation region through pattern driving after beginning from any one of the four specific points, wherein the pattern driving means that a diagonal direction joining two specific points is set as a central axis and the main body is driven about the central axis in a zigzag direction. The boundary indication unit preferably comprises a boundary wire defining the operation region.

In another aspect of the present invention, a method of controlling a lawn mower robot includes acquiring coordinate information of a boundary indication unit defining an operation region, deriving an imaginary quadrangle having the operation region, determining coordinate points of the boundary indication unit which are respectively close to four vertexes of the quadrangle as four specific points, and allowing a main body to move from a first specific point to a second specific point, move to a third specific point when reaching the second specific point, and move from the third specific point to a fourth specific point, among the four specific points.

In another aspect of the present invention, a method of controlling a lawn mower robot includes acquiring coordinate information by allowing a main body to be driven along a boundary defining an operation region, deriving an imaginary quadrangle having the operation region, determining coordinate points of the boundary which are respectively close to four vertexes of the quadrangle as four specific points, and allowing the main body to be driven inside the operation region after beginning from any one of the four specific points, wherein, in the acquiring coordinate information, the main body is driven similar to the form of the boundary, and, in the allowing the main body to be driven inside the operation region, the main body is driven in a zigzag direction.

In a further aspect of the present invention, a lawn mower robot is configured to be operated in an operation region defined by a boundary indication unit, and includes a main body configured for moving inside the operation region defined by the boundary indication unit, wherein the main body includes a sensing portion which is configured to sense the boundary of the operation region, a drive portion which is configured to drive the robot to move along the boundary and then realize pattern driving, and a controller which is configured to derives an imaginary quadrangle having the operation region by means of using coordinate information of the boundary acquired by the movement made by the drive portion, determine coordinate points of the boundary respectively close to four vertexes of the quadrangle as four specific points, and allow the drive portion to perform pattern driving by selecting any one of the four specific points, and the pattern driving means that a diagonal direction joining two specific points is set as a central axis and the main body is driven about the central axis in a zigzag direction. The boundary indication unit may be a boundary mark portion defining an operation region.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a top view illustrating a main body of a lawn mower robot according to an embodiment of the present invention;
FIG. 2 is a block diagram of the lawn mower robot in FIG. 1;
FIG. 3 is a control flowchart;
FIG. 4 is a view for explaining a process of deriving an imaginary quadrangle;
FIG. 5 is a view for explanation of driving;
FIG. 6 is a flowchart for explaining a correction process on determination of a specific point;
FIGs. 7 and 8 are views for explaining realization of the correction process in FIG. 6; and
FIG. 9 is a view for explaining an obstacle avoidance driving method.

Reference will now be made in detail to the preferred embodiments of the present invention, examples of which are illustrated in the accompanying drawings.

In the description, the size or shape of each component illustrated in the drawings may be exaggerated for convenience of description and clarity. In addition, terms defined in consideration of configurations and functions of the present invention may vary with the intention or practice of a user or an operator. Therefore, such terms should be defined based on the entire content disclosed herein.

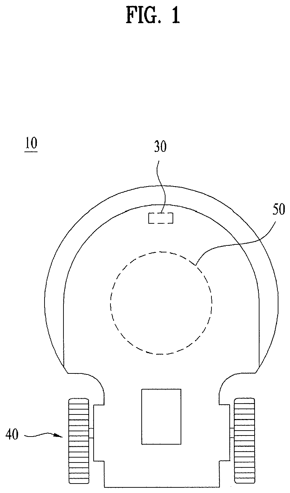

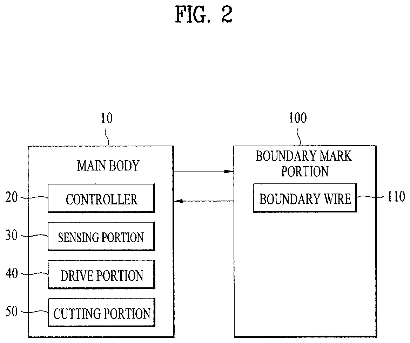

FIG. 1 is a top view illustrating a main body of a lawn mower robot according to an embodiment of the present invention. FIG. 2 is a block diagram of the lawn mower robot in FIG. 1. Hereinafter, a description will be given with reference to FIGs. 1 and 2.

The lawn mower robot may include a main body 10 movable to cut a lawn and a boundary mark portion 100 defining an operation region in which the main body 10 operates during movement thereof.

The boundary mark portion 100 includes a boundary wire 110 defining a boundary of the operation region and may include a station capable of supplying current to the boundary wire 110. That is, the boundary 110 may be connected to the station so as to generate electromagnetic waves by the current supplied from the station.

The main body 10 of the lawn mower robot may include a cutting portion 50 capable of cutting a lawn. The cutting portion 50 may have sharp blades configured to be rotatable.

The main body 10 includes a drive portion 40 which may move and rotate the main body 10 in a desired direction. The drive portion 40 may include a plurality of rotatable wheels each of which may be individually rotated, so that the main body 10 may be rotated in a desired direction.

The main body 10 may include a sensing portion 30 which may sense the boundary wire 110. The sensing portion 30 senses electromagnetic waves generated by the current flowing in the boundary wire 110, thereby being capable of acquiring information about whether the main body 10 reaches the boundary wire 110, whether the main body 10 is present within a closed curved surface formed by the boundary wire 110, whether the main body 10 is driven along the boundary wire 110, and the like.

In addition, the sensing portion 30 may also sense various sorts of information about movement distance, movement speed, position change relative to movement of the main body 10, and the like.

The main body 10 may drive the drive portion 40 using the information sensed by the sensing portion 30. That is, a controller 20 may control driving of the main body 10 using the information sensed by the sensing portion 30. In addition, the controller 20 may also establish a map of the operation region defined by the boundary wire 110 by acquiring coordinate information according to a movement trajectory of the main body 10 while the main body 10 moves along the boundary wire 110.

In particular, the controller 20 may set a starting point from which the main body 10 moves before beginning to operate by means of the coordinate information of the operation region. The controller 20 may control the drive portion 40 such that the main body 10 moves to the starting point.

In addition, the controller 20 may allow the cutting portion 50 to be driven after the main body 10 moves to the operation starting point, so that the cutting portion 50 begins to mow the lawn.

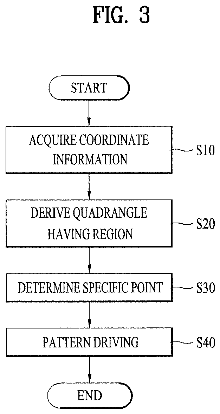

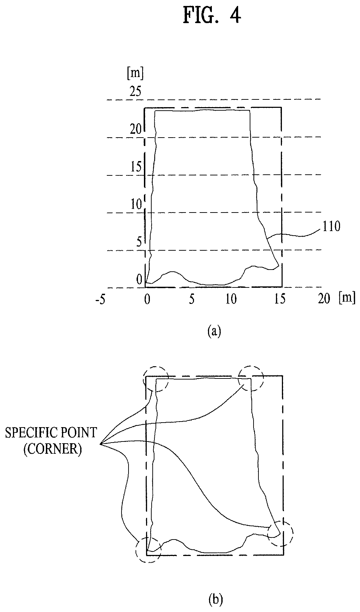

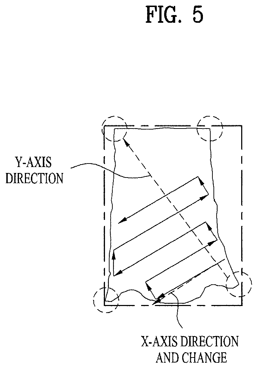

FIG. 3 is a control flowchart. FIG. 4 is a view for explaining a process of deriving an imaginary quadrangle. FIG. 5 is a view for explanation of driving. Hereinafter, a description will be given with reference to FIGs. 3 to 5.

For reference, the operation region defined by the boundary wire is indicated by a solid line and the imaginary quadrangle is indicated by a dotted line, in FIG. 4.

A user may install the boundary wire 110 in a desired yard to be operated. In this case, the boundary wire 110 may be connected to the station so as to supply current to the boundary wire 110. In this case, electromagnetic waves may be generated from the boundary wire 110 by the current supplied.

After the main body 10 moves toward the boundary wire 110, the main body 10 may acquire coordinate information of the operation region while moving along the boundary wire 110 (S10). That is, when the main body 10 arbitrarily reaches the boundary wire 110, the sensing portion 30 may sense that the main body 10 reaches the boundary wire 110. Subsequently, the controller 20 instructs the drive portion 40 to be driven along the boundary wire 110, and then the main boy 10 acquires the coordinate information of the boundary wire 110 by the movement trajectory of the main body 10.

In a case in which the main body 10 is driven in order to obtain the information of the boundary wire 110, namely the information of the operation region, the main body 10 is driven in the form similar to the closed curved surface formed by the boundary wire 110.

The controller 20 may establish the map of the operation region with respect to the movement trajectory of the main body 10 by means of information about the number of rotation of the wheel of the drive portion 40, the movement angle of the main body 10, and the like.

That is, the station may collect coordinates of the boundary wire 110 in a dead-reckoning manner by using heading angle information and odometry information as an origin of the coordinates. Accordingly, the present invention may reduce cost because equipment capable of acquiring coordinates using information from external devices such as GPS is not used.

The imaginary quadrangle including the operation region may be derived (S20).

The imaginary quadrangle (indicated by a dotted line) shown in FIG. 4 includes the overall operation region (indicated by a solid line) defined by the boundary wire 110.

In addition, the imaginary quadrangle is preferably a rectangle. The rectangle has four vertexes, has two sides which are at right angles to each other on the basis of each vertex, and is simple compared to other quadrangles. Therefore, it may be possible to reduce time taken when the imaginary quadrangle is selected.

The derived imaginary quadrangle is preferably configured such that an area difference between the imaginary quadrangle and the operation region is small. It is preferably to select the imaginary quadrangle such that an area difference between the closed curved surface of the operation region and the imaginary quadrangle may be minimized.

It may be possible to form the outermost quadrangle which includes an overall operation region as shown in FIG. 4 using the coordinate information collected in step S10. The outermost quadrangle having the smallest area difference may be determined as the final outermost quadrangle (imaginary quadrangle) by obtaining an area difference between the overall operation region and the outermost quadrangle and rotating the coordinates to perform the same operation.

Meanwhile, after the imaginary quadrangle is derived, coordinate points of the boundary wire 110 which are respectively close to the four quadrangular vertexes are determined as four specific points (S30).

That is, a coordinate value of the boundary wire 110 which is closest to each vertex of, and preferably a respective side of, the determined imaginary quadrangle as shown in FIG. 4(b) is obtained and thus the coordinate value is determined as a specific point (corner) of the region. Since the quadrangle has four vertexes, four specific points may be defined.

When the specific points are determined, the main body 10 moves to any one of the four specific points and begins to be driven (S40).

In order for the main body 10 to move to one specific point from a current position, the main body 10 may directly move to a position of the specific point, and moreover, the main body 10 may move to the specific point along the boundary wire 110 after reaching the boundary wire 110 from the current position. Since the boundary wire 110 may continuously generate signals sensed by the sensing portion 30, the boundary wire 110 may guide the main body 10 such that the main body 10 may easily move to a desired position.

In this case, the main body 10 may be driven within the operation through pattern driving from the specific points. The pattern driving may mean that a diagonal direction joining two specific points is set as a central axis and the main body is driven about the central axis in a zigzag direction, or preferably in a zigzag-like direction wherein the main body 10 is driven along substantially parallel paths.

As shown in FIG. 5, the main body may move toward the other specific point located in the diagonal direction of the quadrangle from any one of four specific points, and may be driven so as to repeatedly move in the left and right directions at a predetermined angle about the diagonal direction, preferably at a vertical angle.

In FIG. 5, a first specific point, a third specific point, a second specific point, and a fourth specific point may be sequentially arranged in a clockwise direction.

The main body 10 may move from the first specific point to the second specific point among the four specific points. In this case, the first and second specific points are not positioned adjacent to each other and are arranged to face each other in the diagonal direction.

When the main body 10 reaches the second specific point, it may be determined that driving of the main body 10 moving from the first specific point to the second specific point is completed. Accordingly, the main body 10 moves to the third specific point and the pattern driving of the main body 10 moving from the third specific point to the fourth specific point may be performed. In this case, when the main body 10 moves from the second specific point to the third specific point, the main body 10 may move along the boundary wire 110.

Meanwhile, a movement direction from the first specific point to the second specific point may be defined as a forward diagonal direction and a movement direction from the second specific point to the first specific point may be defined as a reverse diagonal direction.

In the course of the main body 10 moving in the forward diagonal direction from the first specific point to the second specific point, when the main body 10 reaches the boundary wire 110 or the second specific point, it may be determined that the driving of the main body in the forward diagonal direction is completed. Accordingly, the main body may subsequently move to the third specific point, namely an adjacent other specific point.

The pattern driving may mean that the main body repeatedly moves perpendicular to the diagonal direction (central axis direction) joining two specific points. Of course, the main body may be driven at various angles such as an angle of 85 degrees and an angle of 80 degrees, instead of the vertical angle.

In general, the main body 10 may perform operation in the operation region while moving to finally form a mesh pattern with respect to the operation region.

Meanwhile, the main body 10 may be driven in a constant direction until reaching the boundary wire 110 during driving of the main body 10 in the zigzag direction. As shown in FIG. 5, when the main body 10 is not moved any longer in a relevant direction due to reaching the boundary wire 110, movement of the main body 10 in the relevant zigzag direction stops.

When the main body 10 moves in one direction during driving thereof in the zigzag direction and reaches the boundary wire 110, the main body may be driven in the diagonal direction and then driven in a reverse zigzag direction.

Meanwhile, a distance in the zigzag direction may be similar to or less than a diameter of the cutting portion 50 of the main body 10. That is, the main body 10 may move while scanning the overall operation region during driving thereof in the zigzag direction.

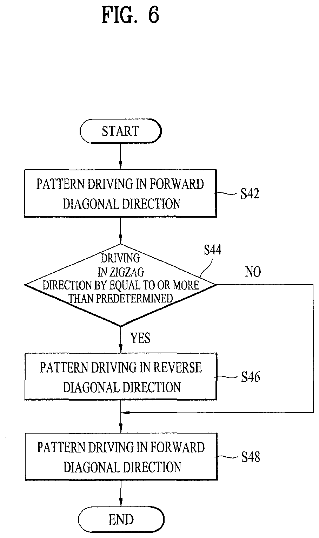

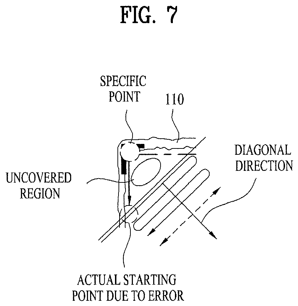

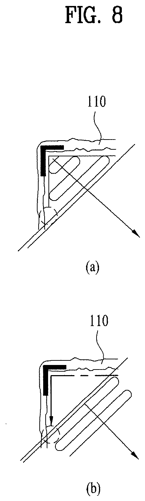

FIG. 6 is a flowchart for explaining a correction process on determination of the specific point. FIGs. 7 and 8 are views for explaining realization of the correction process in FIG. 6. Hereinafter, a description will be given with reference to FIGs. 6 to 8.

When the controller 20 allows the drive portion 40 to move to a specific point, an error in movement to the specific point may occur due to many reasons such as slip of the wheel. That is, even though the main body 10 is not actually moved to the specific point, it may be possible to cause an error of a state in which the main body moves to the specific point.

For example, it may be possible to cause an error of the main body 10 being located at a specific point in a state of being arranged at a position as shown in FIG. 7.

In this case, the main body 10 begins pattern driving in the forward diagonal direction (S42).

It may be determined whether the main body 10 moves by equal to or more than a predetermined distance when initially moving in the zigzag direction (S44).

In this case, the predetermined distance may be approximately 50 cm. Since the operation region does not form an accurate quadrangle, the operation region may be changed as various values due to properties thereof by a user or operator.

When the main body initially moves in the zigzag direction by equal to or more than a predetermined distance, it is determined that the main body does not begin to be driven from the specific point and the main body may perform pattern driving in the reverse diagonal direction as shown in FIG. 8(a) (S46). In this case, the driving of the main body 10 in the reverse diagonal direction may begin from an erroneous specific position in FIG. 7.

To this end, the main body 10 may be driven reversely to the trajectory of the zigzag direction in step S42 and may be returned to the relevant position.

When the main body 10 moves in the reverse diagonal direction and reaches an actual specific point, the main body 10 stops without movement thereof in the zigzag direction. This is because a movement width in the zigzag direction is narrowed at the position of the actual specific point.

When the main body 10 reaches a specific point, the main body 10 may again move to the erroneous specific point in step S42. In this case, although the main body may be driven in a reverse zigzag direction, the controller 20 may allow the main body to move to the erroneous specific point by establishing a map relative to the relevant trajectory.

Meanwhile, after the main body 10 moves to the specific point determined in step S42, the main body 10 may perform pattern driving in the forward diagonal direction (S48).

Next, the pattern driving of the main body 10 in the zigzag form which is performed in the diagonal direction as the central axis is completed after the main body 10 reaches a new specific point, the main body 10 may move to the other specific point.

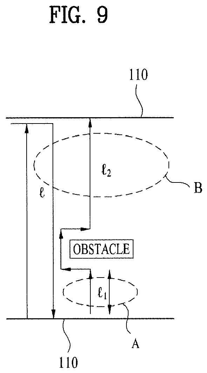

FIG. 9 is a view for explaining an obstacle avoidance driving method. Hereinafter, a description will be given with reference to FIG. 9.

An obstacle which should not be cut by the cutting portion 50 may be located within the operation region defined by the boundary wire 110. For example, the obstacle may be a tree planted in a yard.

In this case, the main body 10 may meet with the obstacle while being driven in the zigzag form in the diagonal direction as the central axis.

A distance 1 by which the main body 10 previously moves in the zigzag direction may be compared with a distance 11 by which the main body 10 moves in the zigzag direction immediately before meeting with the obstacle.

If it is determined that the distance 11 is less than half of the distance, it may be possible to instruct the main body 10 to perform pattern driving with respect to an operation region defined by reference numeral 12 as shown in FIG. 9. That is, the main body 10 may be guided to perform pattern driving with respect to a B region having a relatively longer distance when the main body 10 moves in the zigzag direction, among A and B regions divided on the basis of the obstacle.

In this case, a reference of the A or B region selected by the main body 10 is a region having a long driving distance on the basis of the obstacle. The selected region is a region having a relative larger area, and the main body 10 may be guided within the larger region and perform operation with respect to the larger region.

In this case, it may be determined whether or not the driving distance is long by a ratio between the distance 1 by which the main body previously moves in the zigzag direction and the distance 11 by which the main body currently moves in the zigzag direction.

In accordance with the present invention, since a main body of a lawn mower robot is efficiently driven in an overall region, it may be possible to reduce a region in which the main body is not finally driven.

In addition, it may be possible to reduce a position recognition error of the region and reduce a non-driving region of the main body even though the main body is not driven based on a map using an external sensor.

In addition, since the main body is driven while forming a mesh pattern, it may be possible to efficiently cover an overall region.

In addition, a specific point is generated so that the specific point is utilized as a starting point at which the robot stably forms the mesh pattern to manage and control the same.

In addition, it may be possible to reduce a region in which the main body is not driven within the overall region even without more accurate coordinate information than map information in the region.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A method of controlling a lawn mower robot having a main body, comprising:
acquiring coordinate information of a boundary indication unit (100, 110) defining an operation region;
deriving an imaginary quadrangle having four vertices and including the operation region;
determining four coordinate points of the boundary indication unit (100, 110) each of which is close to a respective one of the four vertices of the imaginary quadrangle as four specific points; and
directing the main body (10) of the lawn mower robot to drive inside the operation region through pattern driving after beginning from any one of the four specific points.

2. The method according to claim 1, wherein the pattern driving means that a diagonal direction joining two non-adjacent of the specific points is set as a central axis and the main body (10) is driven about the central axis in a zigzag path.

3. The method according to claim 2, wherein the main body (10) is driven in a constant direction of a part of the zigzag path until reaching the boundary indication unit (100, 110), during driving of the main body (10) in the zigzag direction.

4. The method according to claim 3, wherein when the main body (10) moves in one direction during driving thereof on the part of the zigzag path and reaches the boundary indication unit (100, 110), the main body (10) is driven in the diagonal direction and is then driven in an opposite direction of another part of the zigzag path.

5. The method according to any of claims 1 to 4, wherein the acquiring coordinate information comprises acquiring coordinate information of the boundary indication unit (100, 110)while the main body (10) is driven along the boundary indication unit (100, 110).

6. The method according to any of claims 1 to 5, wherein the deriving an imaginary quadrangle comprises selecting an imaginary quadrangle , wherein an area difference between the imaginary quadrangle and the operation region is small.

7. The method according to claim 6, wherein the imaginary quadrangle is a rectangle.

8. The method according to any of claims 1 to 7, wherein the directing the main body (10) of the lawn mower robot to drive inside the operation region comprises directing the main body (10) of the lawn mower robot to move to one specific point along the boundary and then begin pattern driving from the specific point.

9. The method according to any of claims 2 to 8 insofar as dependent upon claim 2, wherein the zigzag direction is perpendicular to a direction of the central axis.

10. The method according to any of claims 2 to 9, wherein, in the directing the main body (10) of the lawn mower robot to drive inside the operation region, when the main body (10) moves in a forward diagonal direction and reaches the boundary, it is determined that the driving of the main body (10) in the forward diagonal direction is completed and the main body (10) moves to an adjacent other specific point.

11. The method according to claim 10, wherein the main body moves to the adjacent other specific point along the boundary indication unit (100, 110).

12. The method according to any of claims 2 to 11, wherein, in the directing the main body (10) of the lawn mower robot to drive inside the operation region, it is determined that the main body (10) does not begin from the specific point when initially moving in the zigzag direction by equal to or more than a predetermined distance, and thus the main body (10) performs pattern driving in a reverse diagonal direction.

13. The method according to claim 12, wherein when the driving of the main body (10) in the reverse diagonal direction is completed, the main body (10) performs pattern driving in a forward diagonal direction.

14. The method according to any of claims 2 to 13, wherein when the main body (10) meets with an obstacle in the directing the main body (10) of the lawn mower robot to drive inside the operation region, the main body (10) performs pattern driving with respect to a region having a long driving distance on the basis of the obstacle.

15. The method according to claim 14, wherein it is determined whether the driving distance is long by a ratio between a distance by which the main body (10) previously moves in the zigzag direction and a distance by which the main body (10) currently moves in the zigzag direction.

16. The method according to any one of claims 1 to 15, comprising allowing the main body (10) to move from said one of the four specific points, i.e., a first specific point, to a second specific point, to move to a third specific point when reaching the second specific point, and to move from the third specific point to a fourth specific point, among the four specific points.

17. A lawn mower robot being configured to be operated in an operation region defined by a boundary indication unit (100, 110), comprising:
a main body (10) configured for moving inside the operation region defined by the boundary indication unit,
wherein the main body (10) comprises:
a sensing portion which is configured to sense the boundary of the operation region;
a drive portion which is configured to drive the robot to move along the boundary indication unit (100, 110) and then realize pattern driving; and
**characterized by**
a controller (20) which is configured to derive an imaginary quadrangle including the operation region by means of using coordinate information of the boundary indication unit (100, 110) acquired by the movement made by the drive portion, determine coordinate points of the boundary respectively close to four vertices of the quadrangle as four specific points, and allow the drive portion to perform pattern driving by selecting any one of the four specific points, and
wherein the pattern driving means that a diagonal direction joining two specific points is set as a central axis and the main body (10) is driven about the central axis in a zigzag direction.

18. The lawn mower robot according to claim 17, wherein:
the sensing portion is adapted to sense whether the main body (10) reaches the boundary indication unit (100, 110), which comprises a boundary wire (110), when being driven in the zigzag direction; and
when the relevant information is sensed by the sensing portion, the controller (20) is adapted to change a driving direction of the main body (10).

19. The lawn mower robot according to claim 17 or 18, wherein the controller (20) is adapted to select an imaginary quadrangle, wherein an area difference between the imaginary quadrangle and the operation region is small.

## Patentansprüche

1. Verfahren zum Steuern eines Rasenmähroboters, der einen Hauptkörper aufweist, das aufweist:
Erfassen von Koordinateninformationen einer Begrenzungsanzeigeeinheit (100, 110), die einen Arbeitsbereich definieren;
Ableiten eines imaginären Vierecks, das vier Eckpunkte aufweist und den Arbeitsbereich einschließt;
Bestimmen von vier Koordinatenpunkten der Begrenzungsanzeigeeinheit (100, 110), von denen jeder nahe einem jeweiligen der vier Eckpunkte des imaginären Vierecks ist, als vier spezifische Punkte; und
Anleiten des Hauptkörpers (10) des Rasenmähroboters, innerhalb des Arbeitsbereichs durch eine Musterfahrt zu fahren, nachdem er von irgendeinem der vier spezifischen Punkte startet.

2. Verfahren nach Anspruch 1, wobei die Musterfahrt bedeutet, dass eine Diagonalrichtung, die zwei nicht benachbarte spezifische Punkte verbindet, als eine Mittelachse festgelegt wird und der Hauptkörper (10) um die Mittelachse auf einem Zickzackweg gefahren wird.

3. Verfahren nach Anspruch 2, wobei der Hauptkörper (10) in eine konstante Richtung eines Teils des Zickzackwegs gefahren wird, bis er die Begrenzungsanzeigeeinheit (100, 110) während der Fahrt des Hauptkörper (10) in die Zickzackrichtung erreicht.

4. Verfahren nach Anspruch 3, wobei dann, wenn sich der Hauptkörper (10) während seiner Fahrt auf dem Teil des Zickzackwegs in eine Richtung bewegt und die Begrenzungsanzeigeeinheit (100, 110) erreicht, der Hauptkörper (10) in die Diagonalrichtung gefahren wird und dann in eine entgegengesetzte Richtung eines anderen Teils des Zickzackwegs gefahren wird.

5. Verfahren nach einem der Ansprüche 1 bis 4, wobei das Erfassen von Koordinateninformation das Erfassen von Koordinateninformation der Begrenzungsanzeigeeinheit (100, 110) aufweist, während der Hauptkörper (10) entlang der Begrenzungsanzeigeeinheit (100, 110) gefahren wird.

6. Verfahren nach einem der Ansprüche 1 bis 5, wobei das Ableiten eines imaginären Vierecks das Auswählen eines imaginären Vierecks aufweist, wobei eine Flächendifferenz zwischen dem imaginären Viereck und dem Arbeitsbereich klein ist.

7. Verfahren nach Anspruch 6, wobei das imaginäre Viereck ein Rechteck ist.

8. Verfahren nach einem der Ansprüche 1 bis 7, wobei das Anleiten des Hauptkörpers (10) des Rasenmähroboters, innerhalb des Arbeitsbereichs zu fahren, das Anleiten des Hauptkörpers (10) des Rasenmähroboters aufweist, sich zu einem spezifischen Punkt längs der Begrenzung zu bewegen und dann die Musterfahrt vom spezifischen Punkt aus zu beginnen.

9. Verfahren nach einem der Ansprüche 2 bis 8 insoweit von Anspruch 2 abhängig, wobei die Zickzackrichtung senkrecht zu einer Richtung der Mittelachse ist.

10. Verfahren nach einem der Ansprüche 2 bis 9, wobei beim Anleiten des Hauptkörpers (10) des Rasenmähroboters, innerhalb des Arbeitsbereichs zu fahren, dann, wenn sich der Hauptkörper (10) in eine Vorwärtsdiagonalrichtung bewegt und die Begrenzung erreicht, festgestellt wird, dass die Fahrt des Hauptkörpers (10) in die Vorwärtsdiagonalrichtung beendet ist, und sich der Hauptkörper (10) zu einem benachbarten anderen spezifischen Punkt bewegt.

11. Verfahren nach Anspruch 10, wobei sich der Hauptkörper zum benachbarten anderen spezifischen Punkt entlang der Begrenzungsanzeigeeinheit (100, 110) bewegt.

12. Verfahren nach einem der Ansprüche 2 bis 11, wobei beim Anleiten des Hauptkörpers (10) des Rasenmähroboters, innerhalb des Arbeitsbereichs zu fahren, festgestellt wird, dass der Hauptkörper (10) nicht vom spezifischen Punkt startet, wenn er sich anfänglich um gleich oder mehr als eine vorbestimmte Strecke in die Zickzackrichtung bewegt, und folglich der Hauptkörper (10) eine Musterfahrt in eine umgekehrte Diagonalrichtung durchführt.

13. Verfahren nach Anspruch 12, wobei dann, wenn die Fahrt des Hauptkörpers (10) in die umgekehrte Diagonalrichtung vollendet ist, der Hauptkörper (10) eine Musterfahrt in eine Vorwärtsdiagonalrichtung durchführt.

14. Verfahren nach einem der Ansprüche 2 bis 13, wobei dann, wenn der Hauptkörper (10) beim Anleiten des Hauptkörpers (10) des Rasenmähroboters, innerhalb des Arbeitsbereichs zu fahren, auf ein Hindernis trifft, der Hauptkörper (10) eine Musterfahrt bezüglich eines Bereiches durchführt, der auf der Grundlage des Hindernisses eine lange Fahrstrecke aufweist.

15. Verfahren nach Anspruch 14, wobei durch ein Verhältnis zwischen einer Strecke, um die sich der Hauptkörper (10) vorher in die Zickzackrichtung bewegt hat, und einer Strecke, um die sich der Hauptkörper (10) gegenwärtig in die Zickzackrichtung bewegt, festgestellt wird, ob die Fahrstrecke lang ist.

16. Verfahren nach einem der Ansprüche 1 bis 15, das das Ermöglichen aufweist, dass sich der Hauptkörper (10) von dem einen der vier spezifischen Punkte, d.h. einem ersten spezifischen Punkt zu einem zweiten spezifischen Punkt bewegt, sich zu einem dritten spezifischen Punkt bewegt, wenn er den zweiten spezifischen Punkt erreicht, und sich vom dritten spezifischen Punkt zum einem vierten spezifischen Punkt unter den vier spezifischen Punkten bewegt.

17. Rasenmähroboter, der konfiguriert ist, in einem Arbeitsbereich betrieben zu werden, der durch eine Begrenzungsanzeigeeinheit (100, 110) definiert ist, der aufweist:
einen Hauptkörper (10), der zur Bewegung innerhalb des Arbeitsbereichs konfiguriert ist, der durch die Begrenzungsanzeigeeinheit definiert ist,
wobei der Hauptkörper (10) aufweist:
einen Abtastabschnitt, der konfiguriert ist, die Begrenzung des Arbeitsbereichs abzutasten;
einen Antriebsabschnitt, der konfiguriert ist, den Roboter zu betreiben, sich längs der Begrenzungsanzeigeeinheit (100, 110) zu bewegen und dann eine Musterfahrt durchzuführen; und
**gekennzeichnet durch**
eine Steuereinrichtung (20), die konfiguriert ist, ein imaginäres Viereck, das den Arbeitsbereich einschließt, mittels einer Verwendung von Koordinateninformation der Begrenzungsanzeigeeinheit (100, 110) abzuleiten, die durch die Bewegung erfasst werden, die durch den Antriebsabschnitt durchgeführt wird, Koordinatenpunkte der Begrenzung, die jeweils nahe zu vier Eckpunkten des Vierecks sind, als vier spezifische Punkte zu bestimmen, und es dem Antriebsabschnitt zu ermöglichen, durch Auswählen irgendeines der vier spezifischen Punkte eine Musterfahrt durchzuführen, und
wobei die Musterfahrt bedeutet, dass eine Diagonalrichtung, die zwei spezifische Punkte verbindet, als eine Mittelachse festgelegt wird, und der Hauptkörper (10) um die Mittelachse in einer Zickzackrichtung gefahren wird.

18. Rasenmähroboter nach Anspruch 17, wobei:
der Abtastabschnitt eingerichtet ist, abzutasten, ob der Hauptkörper (10) die Begrenzungsanzeigeeinheit (100, 110) erreicht, die einen Begrenzungsdraht (110) aufweist, wenn er in die Zickzackrichtung gefahren wird; und
wenn die relevanten Informationen durch den Abtastabschnitt abgetastet werden, die Steuereinrichtung (20) eingerichtet ist, eine Fahrrichtung des Hauptkörpers (10) zu ändern.

19. Rasenmähroboter nach Anspruch 17 oder 18, wobei die Steuereinrichtung (20) eingerichtet ist, ein imaginäres Viereck auszuwählen, wobei eine Flächendifferenz zwischen dem imaginären Viereck und dem Arbeitsbereich klein ist.

## Revendications

1. Procédé de commande d'une tondeuse à gazon robotisée présentant un corps principal, comprenant :
l'acquisition d'informations de coordonnées d'une unité d'indication de limite (100, 110) définissant une zone de fonctionnement ;
la déduction d'un quadrilatère imaginaire à quatre sommets comprenant la zone de fonctionnement ;
la détermination, en tant que quatre points spécifiques, de quatre points de coordonnées de l'unité d'indication de limite (100, 110), chacun d'entre eux étant proche d'un des quatre sommets du quadrilatère imaginaire ; et
le guidage du corps principal (10) de tondeuse à gazon robotisée pour être conduit à l'intérieur de la zone de fonctionnement par un modèle de guidage après démarrage depuis l'un quelconque des quatre points spécifiques.

2. Procédé selon la revendication 1, où le modèle de guidage signifie qu'une direction en diagonale reliant deux points non adjacents des points spécifiques est définie comme axe central et que le corps principal (10) est guidé autour de l'axe central suivant un chemin en zigzag.

3. Procédé selon la revendication 2, où le corps principal (10) est guidé dans une direction constante d'une partie du chemin en zigzag jusqu'à ce qu'il atteigne l'unité d'indication de limite (100, 110) pendant le guidage du corps principal (10) suivant la direction en zigzag.

4. Procédé selon la revendication 3, où, quand le corps principal (10) se déplace dans une direction pendant son guidage sur la partie du chemin en zigzag et atteint l'unité d'indication de limite (100, 110), le corps principal (10) est guidé dans la direction en diagonale puis dans une direction opposée d'une autre partie du chemin en zigzag.

5. Procédé selon l'une des revendications 1 à 4, où l'acquisition d'informations de coordonnées comprend l'acquisition d'informations de coordonnées de l'unité d'indication de limite (100, 110) pendant que le corps principal (10) est guidé le long de l'unité d'indication de limite (100, 110).

6. Procédé selon l'une des revendications 1 à 5, où la déduction d'un quadrilatère imaginaire comprend la sélection d'un quadrilatère imaginaire, une différence de surface entre le quadrilatère imaginaire et la zone de fonctionnement étant réduite.

7. Procédé selon la revendication 6, où le quadrilatère imaginaire est un rectangle.

8. Procédé selon l'une des revendications 1 à 7, où le guidage du corps principal (10) de tondeuse à gazon robotisée pour être conduit à l'intérieur de la zone de fonctionnement comprend l'entraînement du corps principal (10) de tondeuse à gazon robotisée pour déplacer celui-ci vers un point spécifique le long de la limite puis le déclenchement du modèle de guidage à partir du point spécifique.

9. Procédé selon l'une des revendications 2 à 8, si dépendante de la revendication 2, où la direction en zigzag est perpendiculaire à la direction de l'axe central.

10. Procédé selon l'une des revendications 2 à 9, où, lors du guidage du corps principal (10) de tondeuse à gazon robotisée pour être conduit à l'intérieur de la zone de fonctionnement, quand le corps principal (10) se déplace dans une direction en diagonale vers l'avant et atteint la limite, il est déterminé que le guidage du corps principal (10) dans la direction en diagonale vers l'avant est terminé et que le corps principal (10) se déplace vers un autre point spécifique adjacent.

11. Procédé selon la revendication 10, où le corps principal se déplace vers l'autre point spécifique adjacent le long de l'unité d'indication de limite (100, 110).

12. Procédé selon l'une des revendications 2 à 11, où, lors du guidage du corps principal (10) de tondeuse à gazon robotisée pour être conduit à l'intérieur de la zone de fonctionnement, il est déterminé que le corps principal (10) ne part pas du point spécifique en se déplaçant initialement dans la direction en zigzag d'une distance égale ou supérieure à une distance définie, et donc que le corps principal (10) applique le modèle de guidage dans une direction en diagonale inverse.

13. Procédé selon la revendication 12, où, à l'issue du guidage du corps principal (10) dans la direction en diagonale inverse, le corps principal (10) applique le modèle de guidage dans une direction en diagonale vers l'avant.

14. Procédé selon l'une des revendications 2 à 13, où, quand le corps principal (10) rencontre un obstacle lors du guidage du corps principal (10) de tondeuse à gazon robotisée pour être conduit à l'intérieur de la zone de fonctionnement, le corps principal (10) applique le modèle de guidage par rapport à une zone ayant une longue distance de guidage sur la base de l'obstacle.

15. Procédé selon la revendication 14, où il est déterminé si la distance de guidage est longue au moyen d'un rapport entre une distance de déplacement précédent du corps principal (10) dans la direction en zigzag et une distance de déplacement actuel du corps principal (10) dans la direction en zigzag.

16. Procédé selon l'une des revendications 1 à 15, comprenant l'autorisation de déplacement du corps principal (10) depuis un des quatre points spécifiques, en l'occurrence un premier point spécifique, vers un deuxième point spécifique, de déplacement vers un troisième point spécifique une fois atteint le deuxième point spécifique, et de déplacement du troisième point spécifique vers un quatrième point spécifique entre les quatre points spécifiques.

17. Tondeuse à gazon robotisée prévue pour être mise en service dans une zone de fonctionnement définie par une unité d'indication de limite (100, 110), comprenant :
un corps principal (10) prévu pour se déplacer à l'intérieur de la zone de fonctionnement définie par l'unité d'indication de limite,
ledit corps principal (10) comprenant :
une section de détection prévue pour détecter la limite de la zone de fonctionnement ;
une section de guidage prévue pour guider le déplacement du robot le long de l'unité d'indication de limite (100, 110) puis pour réaliser le modèle de guidage ;
**caractérisée par**
un dispositif de commande (20) prévu pour déduire un quadrilatère imaginaire comprenant la zone de fonctionnement au moyen d'informations de coordonnées de l'unité d'indication de limite (100, 110) acquises par le déplacement effectué par la section de guidage, déterminer en tant que quatre points spécifiques des points de coordonnées de la limite proches de quatre sommets du quadrilatère, et autoriser la section de guidage à appliquer un modèle de guidage par sélection de l'un quelconque des quatre points spécifiques, et
où le modèle de guidage signifie qu'une direction en diagonale reliant deux points spécifiques est définie comme axe central et que le corps principal (10) est guidé autour de l'axe central dans une direction en zigzag.

18. Tondeuse à gazon robotisée selon la revendication 17, où :
la section de détection est prévue pour détecter si le corps principal (10) atteint l'unité d'indication de limite (100, 110) comportant un câble périphérique (110) quand celui-ci est guidé dans la direction en zigzag ; et où,
quand les informations pertinentes sont détectées par la section de détection, le dispositif de commande (20) est prévu pour changer une direction de guidage du corps principal (10).

19. Tondeuse à gazon robotisée selon la revendication 17 ou la revendication 18, où le dispositif de commande (20) est prévu pour sélectionner un quadrilatère imaginaire, une différence de surface entre ledit quadrilatère imaginaire et la zone de fonctionnement étant réduite.
